**Europäisches Patentamt**

**European Patent Office**

**Office européen des brevets**

(19)

(11) Veröffentlichungsnummer : **0 292 470 B1**

# (12) EUROPÄISCHE PATENTSCHRIFT

(45) Veröffentlichungstag der Patentschrift :
**16.10.91 Patentblatt 91/42**

(21) Anmeldenummer : **88890124.6**

(22) Anmeldetag : **17.05.88**

(51) Int. Cl.⁵ : **B01J 19/10,** B01D 21/00,
B01D 43/00

(54) Verfahren zur Abtrennung von Inhaltsstoffen aus einer Flüssigkeit und Vorrichtung zur Durchführung des Verfahrens.

Verbunden mit 88904175.2/0362233
(europäische
Anmeldenummer/Veröffentlichungsnummer)
durch Entscheidung vom 18.07.90.

(30) Priorität : **19.05.87 AT 1269/87**

(43) Veröffentlichungstag der Anmeldung :
**23.11.88 Patentblatt 88/47**

(45) Bekanntmachung des Hinweises auf die
Patenterteilung :
**16.10.91 Patentblatt 91/42**

(84) Benannte Vertragsstaaten :
**AT BE CH DE ES FR GB GR IT LI LU NL SE**

(56) Entgegenhaltungen :
EP-A- 0 147 032
EP-A- 0 167 406
CH-A- 294 746

(56) Entgegenhaltungen :
DE-C- 836 640
FR-A- 828 204
GB-A- 713 272
GB-A- 2 098 498
US-A- 4 358 373
IBM TECHNICAL DISCLOSURE BULLETIN,
Band 25, Nr. 1, Juni 1982, Seiten 192-193, New
York, US; H.W. CURTIS et al.: "Ultrasonic continuous flow plasmapheresis separator"

(73) Patentinhaber : **Stuckart, Wolfgang, Dipl.-Ing.**
**Keinergasse 17/14**
**A-1030 Wien (AT)**

(72) Erfinder : **Stuckart, Wolfgang, Dipl.-Ing.**
**Keinergasse 17/14**
**A-1030 Wien (AT)**

(74) Vertreter : **Pawloy, Heinrich, Dr. et al**
**Patentanwälte Dr. Heinrich Pawloy Dipl.-Ing.**
**Helmut Sonn Dipl.-Ing. Arnulf Weinzinger**
**Riemergasse 14**
**A-1010 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europä-ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

## Beschreibung

Die Erfindung bezieht sich auf ein Verfahren zur Flockung, Fällung, Agglomeration oder Koagulation von in einer Flüssigkeit gelösten, kolloidal gelösten, suspendierten oder emulgierten Inhaltsstoffen oder Mikroorganismen und zur Abtrennung dieser Stoffe oder Mikroorganismen aus dieser Flüssigkeit, wobei die mit den abzutrennenden Inhaltsstoffen und/oder Mikroorganismen beladene Flüssigkeit im Durchfluß der Feldwirkung von Ultraschallwellen, die ein Feld stehender Wellen bilden, unterworfen wird, welche eine Ansammlung abzutrennender Teilchen in den Schwingungsknotenbereichen oder Schwingungsbauchbereichen des Ultraschallwellenfeldes bewirken, und die so angesammelten Teilchen von der Flüssigkeit durch Sedimentation abgetrennt werden.

Um suspendierte Partikel oder Mikroorganismen, welche auch submikroskopische Abmessungen haben können, in vertretbar kurzer Zeit aus Flüssigkeiten mittels Sedimentation oder mittels Filtration abscheiden zu können, müssen diese zu größeren Teilchen vereinigt oder an größere Teilchen angelagert werden. Es können in einem dispersen System durch Abbau der elektrostatischen Oberflächenladungen der Partikel (Entstabilisierung) und durch Zufuhr von Bewegungsenergie (Transport) Koagulationsvorgänge ermöglicht werden.

Es ist bekannt, in Flüssigkeiten suspendierte Partikel dadurch, daß die betreffende Flüssigkeit einem Ultraschallwellenfeld ausgesetzt wird, zu flocken und das geflockte Material dann von der Flüssigkeit abzutrennen (US-PS 4055491).

Es ist ein Verfahren eingangs erwähnter Art bekannt (FR-A-828204), bei dem die zu behandelnde Flüssigkeit in einer zur Schallausbreitungsrichtung des Ultraschallfeldes parallelen Durchflußrichtung durch ein rohrförmiges Behandlungsgefäß geleitet wird. Die zu behandelnde Flüssigkeit muß so durch die vom Ultraschallfeld gebildeten Ansammlungen der abzuscheidenden Teilchen hindurchfließen, wobei die Strömung diese Teilchen wieder mitzunehmen trachtet ; dies wirkt der angestrebten Abtrennung dieser Teilchen von der Flüssigkeit entgegen ; um dies wettzumachen, ist ein größerer Energieeinsatz und ein größerer baulicher Aufwand erforderlich.

Es sind weiter auch Verfahren bekannt (GB-A-2098498, GB-A-713272), bei denen eine durch eine Leitung oder einen Tank strömende Flüssigkeit der Wirkung eines Ultraschallfeldes ausgesetzt wird, welches sich quer zur Strömungsrichtung der Flüssigkeit ausbreitet ; es sollen dabei Teilchen, welche sich in der Flüssigkeit befinden und abgetrennt werden sollen, quer durch den Flüssigkeitsstrom und seitlich aus diesem hinausgetrieben werden. Die Teilchen müssen also im Ultraschallfeld über eine verhältnismäßig große Strecke quer zur Strömung getrieben werden und es ergibt sich daraus eine verhältnismäßig geringe Abscheidungsleistung bzw. sind nach dem Passieren des Ultraschallfeldes noch verhältnismäßig viele Teilchen in der Flüssigkeit vorhanden.

Es ist ein Ziel der vorliegenden Erfindung, ein Verfahren eingangs erwähnter Art zu schaffen, bei dem auf möglichst wirkungsvolle Weise bei einfachem und energiesparendem Verfahrensablauf Flüssigkeiten, insbesondere Wasser, zum Zweck der Reinigung, sowie auch Suspensionen zur Gewinnung und Rückgewinnung von Rohstoffen und Mikroorganismen, behandelt werden können. Es soll auch die Gewinnung von feinkörniger Kohle aus kohlehaltigen Suspensionen, auch wenn diese Suspensionen noch andere Stoffe beinhalten, möglich sein.

Das erfindungsgemäße Verfahren eingangs erwähnter Art ist dadurch gekennzeichnet, daß die mit Inhaltsstoffen oder Mikroorganismen beladene Flüssigkeit in annähernd im rechten Winkel zur horizontalen Schallausbreitungsrichtung des Ultraschalles verlaufendem Durchfluß durch ein oder mehrere Felder stehender Ultraschallwellen hindurchgeleitet wird, wobei die Ultraschallschallfrequenz f größer ist als ein Siebentel der Grenzfrequenz fo, wobei der Bereich oberhalb der halben Grenzfrequenz fo bevorzugt ist und für fo gilt :

$$fo \ (Hz) = 0,4775 \ n/R^2 \ ;$$

hiebei ist n die kinematische Viskosität der Flüssigkeit in $m^2/s$ und R der wirksame Partikelradius in m ; der wirksame Partikelradius R ist bei kugelförmigen Partikeln gleich deren Radien ; für Partikel anderer Gestalt ist R der Radius jener Kugel aus gleichem Stoff, welche der oszillierenden Flüssigkeit den gleichen Strömungswiderstand entgegensetzt.

Durch diese Maßnahmen kann der vorstehend angeführten Zielsetzung gut entsprochen werden. Es wird bei geringem Energiebedarf eine rasche Koagulation bzw. Zusammenballung der Inhaltsstoffe der Flüssigkeit erzielt. Hiebei üben die vorgesehene Wahl der Ultraschallfrequenz und die spezielle Kombination von Schallausbreitungsrichtung und Durchflußrichtung einen sehr vorteilhaften Einfluß aus. Es ergibt sich ein stehendes Wellenfeld, in welchem die Flächen, in denen sich die abzuscheidenden Teilchen sammeln, im wesentlichen in Durchflußrichtung verlaufen und es kann auch das Abscheiden durch Sedimentation der Teilchen aus diesen Teilchenansammlungen heraus fortlaufend erfolgen. Es entstehen im Bereich von Flächen, die einen gegenseitigen Abstand von der halben Wellenlänge der Ultraschallwellen in der betreffenden Flüssigkeit haben und rechtwinkelig zur Schallausbreitung verlaufen, Agglomerate, die so groß sind, daß sie durch Sedimentation von der Flüssigkeit leicht abgetrennt werden können.

Die Bildung des stehenden Ultraschallwellenfeldes kann einfach dadurch erfolgen, daß piezoelektrische elektro-akustische Wandler in der Resonanzfrequenz oder in einer der ungeradzahligen Oberwellen des einen Resonator bildenden Beschallungsraumes angeregt werden, so daß sich im Beschallungsraum ein stehendes Ultraschallwellenfeld aufbaut, wobei als Resonator das Paket aller durchschallten akustischen Schichten einschließlich jener Oberflächen, an welchen die Schallwellen reflektiert werden, zu verstehen ist.

Wie bekannt ist, befördert der Schallstrahlungsdruck die Partikel in die Schnellebauchflächen des Ultraschallfeldes, an jene Orte also, an denen die Auslenkung der Wassermoleküle am größten ist. Wenn die Ultraschallfrequenz eine bestimmte Grenzfrequenz fo übersteigt, dann folgen die Partikel nur minimal der Schwingung des Wassers. In den Schnellebäuchen herrscht somit maximale Relativbewegung zwischen den Partikeln und dem oszillierenden Wasser. Die Wassermoleküle passieren periodisch die Schnellebauchflächen im rechten Winkel mit maximaler Schallschnelle. Durch die in den Schnellebauchflächen angesammelten Partikel, welche die Schwingung des Wassers nur minimal mitmachen, ist dort eine Verringerung des durchströmbaren Querschnittes gegeben. Die Geschwindigkeit des schwingenden Wassers muß sich daher zwischen den Partikeln erhöhen, wodurch sich dort bei Erhaltung der Gesamtenergie zwangsläufig eine örtliche Verringerung des Druckes zwischen den Partikeln ergibt. Dieser relative Unterdruck zwischen den Partikeln bewirkt deren gegenseitige Anziehung, welche beim erfindungsgemäßen Verfahren zur Koagulation der Partikel benutzt wird.

Es ist beim erfindungsgemäßen Verfahren vorteilhaft, wenn die Flüssigkeit in laminarer Strömung durch das Ultraschallfeld bzw. die Ultraschallfelder geleitet wird.

Wenn die Suspension durch das Ultraschallfeld fließt, werden dort die Partikel festgehalten und agglomeriert, während die Flüssigkeit gereinigt das Schallfeld verläßt. Zur Entnahme der Agglomerate kann unterhalb des Beschallungsraumes ein Absetzraum vorgesehen werden. Durch die horizontale Schallausbreitungsrichtung ordnen sich die Partikel in vertikalen Ebenen an und sinken dort, nachdem sie sich zu größeren Agglomeraten zusammengeschlossen haben, der Schwerkraft folgend in den Absetzraum.

Eine vorteilhafte Ausführungsform des erfindungsgemäßen Verfahrens sieht vor, daß die Flüssigkeit in einem stehenden Ultraschallwellenfeld, das zwischen zwei parallelen und einander gegenüberliegend angeordneten Ultraschallwandlern gebildet wird, im horizontalen Durchfluß beschallt wird. Es kann so auf sehr einfache Weise eine Sammlung der Flüssigkeitsinhaltsstoffe in Ebenen im Ultraschallfeld herbeigeführt und eine einfache und wirksame Abtrennung durch Schwerkraft erzielt werden.

Eine andere Ausführungsform des erfindungsgemäßen Verfahrens sieht vor, daß die Flüssigkeit zwei Ultraschallfeldern ausgesetzt wird, welche einander räumlich innerhalb des Beschallungsraumes überschneiden und gleichzeitig oder alternierend auf die Flüssigkeit einwirken, wobei vorzugsweise zwei ebene Ultraschallfelder, die einander im rechten Winkel schneiden, angewendet werden, wobei die Schnittlinien der Schwingungsknotenebenen parallel zur Fließrichtung der Flüssigkeit verlaufen. Ein besonderer Vorteil dieser Ausführungsform besteht darin, daß sich die Partikel in Linien anordnen und sich dadurch dort in weit höherem Ausmaß konzentrieren als bei einer eindimensionalen Beschallung. Die Linien, in welchen sich die Partikel anordnen, stellen den Schnitt der Schnellebauchebenen der beiden Ultraschallfelder dar.

Eine weitere günstige Ausführungsform des erfindungsgemäßen Verfahrens ist dadurch gekennzeichnet, daß die Flüssigkeit in einem zylindrischen Ultraschallfeld, dessen Schwingungsknoten in annähernd zylindrischen und zueinander koaxialen Flächen liegen und durch das die Flüssigkeit annähernd parallel zur geometrischen Achse des Feldes hindurchgeleitet wird, oder aufeinanderfolgend in mehreren solchen Feldern beschallt wird.

Die Leistung der elektrischen Schwingung, mit welcher die Ultraschallwandler erregt werden, wird vorteilhaft mit weniger als 3 Watt pro $cm^2$ der angesteuerten Ultraschallwandleroberfläche gewählt, wobei der Bereich zwischen 0,5 und 2 Watt/$cm^2$ bevorzugt ist.

Der Energieeintrag pro $m^3$ Suspension wird abhängig von deren Dichte und der elektrostatischen Oberflächenladung der suspendierten Partikel vorteilhaft zwischen 0,05 und 10 kWh gewählt, wobei der Bereich zwischen 0,1 und 4 kWh bevorzugt ist.

Für Mineralstoffsuspensionen sieht man vorteilhaft eine Beschallung mit Ultraschallfrequenzen zwischen fo/3 und 10 fo vor, wobei bei weitgestuften Korngrößenverteilungen die Verwendung von Frequenzen zwischen fo/2 und 4 fo besonders günstig ist. Für suspendierte organische Stoffe oder Stoffe, deren Dichte annähernd der Dichte der Flüssigkeit entspricht, ist es günstig, bei Frequenzen zwischen 2 fo und 12 fo zu arbeiten, wobei der Bereich zwischen 3 fo und 5 fo bevorzugt ist.

Für die Koagulation von Kohlepartikeln, die sich in Wasser befinden, sowie für deren Abtrennung sind Ultraschallfrequenzen zwischen fo/2 und 10 fo vorteilhaft, wobei eine besonders intensive Flockung im Bereich zwischen fo und 4 fo erreicht wird. Für die Koagulation von Inhaltsstoffen höherer Dichte — wie z.B. Metallstäube — werden vorteilhaft Ultraschallfrequenzen zwischen fo/7 und 10 fo verwendet, wobei im Hinblick auf einen wirtschaftlichen Energieeinsatz der Bereich zwischen fo/6 und fo/2 zu bevorzugen ist.

Mit dem heranwachsen der Koagulate vergrößert sich deren Radius R und die von R abhängige Grenzfrequenz fo wird kleiner. In bestimmten Fällen ist es günstig, die Ultraschallbehandlung in zwei oder mehreren aufeinanderfolgenden Stufen mit abnehmender Frequenz durchzuführen. Die in der ersten Stufe gebildeten Agglomerate können dann in den nachfolgenden Stufen nochmals vereint werden. Der Radius R der Agglomerate kann maximal bis zum Viertel der jeweiligen Ultraschallwellenlänge heranwachsen.

Vielfach kann durch ein Beschallen mit amplitudenmoduliertem Ultraschall eine deutlich raschere Koagulation erreicht werden. Besonders vorteilhaft erwies sich eine Amplitudenmodulation mit Frequenzen bis 20 kHz, wobei als Modulationssignal z.B. Sinus- und Rechtecksignale verwendet werden können.

Unabhängig von einer allfälligen Modulation ist es mitunter günstig, die Ultraschallbehandlung intermittierend durchzuführen.

Vielfach finden Aktivkohle oder andere oberflächenaktive Stoffe, wie z.B. manche Tone, Anwendung als Adsorptionsmedien für Flüssigkeitsinhaltsstoffe, die auch gelöst sein können. Eine pulverförmige Einbringung der Adsorptionsmedien bewirkt eine innigere Vermischung mit der Flüssigkeit und ermöglicht dadurch kürzere Kontaktzeiten, wodurch Desorptionsvorgänge vermieden werden. Bei einer Ultraschallbehandlung entsprechend dem erfindungsgemäßen Verfahren werden die agglomerierrierten Partikel durch Sedimentation von der Flüssigkeit abgetrennt. Darüberhinaus kann die Ultraschallbehandlung auch die Anlagerung der Flüssigkeitsinhaltsstoffe an das Adsorptionsmedium begünstigen.

Zur Erleichterung der gegenseitigen Annäherung der Partikel ist es oft vorteilhaft, allenfalls vorhandene elektrostatische Oberflächenladungen der Partikel durch Zudosieren von Flockungsmitteln zu verringern oder zu neutralisieren. Mitunter kann auch die Zudosierung von Polymeren als Flockungshilfsmittel zur Erhöhung der mechanischen Stabilität der Agglomerate zweckmäßig sein.

Durch den Zusatz von bis zu 5% Öl kann die Kohleabscheidung im Wasser durch die Bildung von größeren und stabileren Flocken verbessert werden.

Die Erfindung bezieht sich weiter auf Vorrichtungen zur Durchführung des erfindungsgemäßen Verfahrens.

Eine bevorzugte Ausführungsform einer erfindungsgemäßen Vorrichtung, welche einen Beschallungsraum aufweist, durch den die zu behandelnde Flüssigkeit hindurchgeleitet wird und der an einer Wand angeordnete Ultraschallwandler aufweist, die im Beschallungsraum ein Ultraschallfeld bilden, und der weiter mit einem oder mehreren Absetzräumen versehen ist, an deren tiefsten Stellen Entnahmevorrichtungen für die abgesetzten Teilchen vorgesehen sind, ist dadurch gekennzeichnet, daß der Beschallungsraum der Vorrichtung durch einen Beschallungstank gebildet ist, der an oder in einer zur horizontalen Durchflußrichtung der Flüssigkeit parallelen Seitenwand einen oder mehrere Ultraschallwandler und an der gegenüberliegenden parallelen Seitenwand Schallreflektoren aufweist und in dessen Tankboden der oder die vorzugsweise trichterförmigen Absetzräume vorgesehen sind, welche vorzugsweise oben durch Strömungsblenden begrenzt sind. So erfolgt die Schallausbreitung horizontal und im rechten Winkel zur Strömungsrichtung. An den beiden rechtwinkelig zur Strömungsrichtung stehenden Seitenwänden befinden sich der Zulauf und der Ablauf für die Flüssigkeit. Die Strömungsblenden, welche die Absetzräume vom Beschallungsraum trennen, sind vorzugsweise horizontal gitterrostartig ausgebildet. Nach dem Zulauf und vor dem Ablauf kann man lotrechte, im rechten Winkel zur Strömungsrichtung stehende Beruhigungsgitter vorsehen. Unmittelbar vor der Zulauföffnung und der Ablauföffnung kann man im Beschallungstank je eine Umlenkblende anbringen.

Eine andere vorteilhafte Ausführungsform einer erfindungsgemäßen Vorrichtung mit einem Beschallungsraum, durch den die zu behandelnde Flüssigkeit hindurchgeleitet wird und der einen Ultraschallwandler aufweist, der im Behandlungsraum ein Ultraschallfeld bildet, ist dadurch gekennzeichnet, daß der Beschallungsraum der Vorrichtung durch ein Gefäß in Form eines geraden Zylinders aus vorzugsweise schallhartem Material gebildet ist, in welchen ein zylindrischer, radial schwingender Ultraschallwandler koaxial eingebaut ist. Hiebei ergibt sich eine vorteilhafte Weiterbildung, wenn man vorsieht, daß der zylindrische Ultraschallwander rohrförmige Gestalt hat und sowohl in seinem Inneren von der Flüssigkeit durchströmt als auch außen von der Flüssigkeit umströmt wird. Bei dieser Ausbildung kann die gemeinsame Achse des Wandlers und des Gefäßes lotrecht sein, wobei die Flüssigkeit zuerst von oben nach unten durch das Innere des rohrförmigen Ultraschallwandlers geleitet wird und danach an dessen unterem Ende in das äußere Gefäß austritt und dort nach oben strömt, während die Koagulate nach unten sinken und dadurch von der Flüssigkeit getrennt werden.

Eine weitere Ausführungsform einer erfindungsgemäßen Vorrichtung mit einem Beschallungsraum, durch den die zu behandelnde Flüssigkeit hindurchgeleitet wird und der an einer Wand angeordnete Ultraschallwandler aufweist, die im Beschallungsraum ein Ultraschallfeld bilden, und der weiter mit einem oder mehreren Absetzräumen versehen ist, an deren tiefsten Stellen Entnahmevorrichtungen für die abgesetzten Teilchen vorgesehen sind, ist dadurch gekennzeichnet, daß der Beschallungsraum der Vorrichtung durch einen durchströmbaren quaderförmigen Beschallungstank gebildet ist, in den zwei zueinander im rechten Winkel stehende und ebene Wände eingebaut sind, welche Gruppen von Ultraschallwandlern tragen, wobei diese Wände zu den Seitenflächen es Beschallungstankes parallel verlaufen und einander innerhalb des Beschallungsraumes vorzugsweise so schneiden, daß der Beschallungsraum in zwei oder mehrere durchströmbare Teilräume geteilt wird. Der durchströmbare Beschallungstank kann auf diese Weise z.B. in vier Teilräume unterteilt werden, welche auch einen unterschiedlichen Querschnitt haben können und sowohl parallel als auch in Serie geschaltet durchströmt werden können, wobei die einzelnen Teilräume auch in entgegengesetzten Richtungen durchströmt werden können.

Eine andere Ausführungsform einer erfindungsgemäßen Vorrichtung mit einem Beschallungsraum, durch den die zu behandelnde Flüssigkeit hindurchgeleitet wird und der einen Ultraschallwandler aufweist, der im Behandlungsraum ein Ultraschallfeld bildet, ist dadurch gekennzeichnet, daß im Beschallungsraum der Vorrichtung ein Parallelplattenabscheider angeordnet ist, durch dessen zwischen den Abscheideplatten liegende Zwischenräume die Flüssigkeit hindurchgeleitet wird, und daß zwei ebene Gruppen von Ultraschallerzeugern parallel zum Abscheideplattenpaket angeordnet sind, wobei das gesamte Abscheideplattenpaket zwischen den Ultraschallwandlern liegt, und die Dicke der Abscheideplatten vorzugsweise einem ungeradzahligen Vielfachen eines Viertels der Wellenlänge des Ultraschalles indiesen Abscheideplatten entspricht und die Oberflächenrauhigkeit der Abscheideplatten ein Zehntel der Ultraschallwellenlänge nicht übersteigt. Es wird ein stehendes Wellenfeld erzeugt, welches sich relativ zu den Ultraschallwandlern bewegt. Der besondere Vorteil dieser Ausführungsform besteht darin, daß die Partikel im Ultraschallfeld koaguliert werden und der Bewegung des Feldes folgend zu den Abscheideplatten befördert werden und dort sedimentieren, wodurch eine wesentlich höhere Abscheideleistung als in herkömmlichen Parallelplattenabscheidern erreicht wird.

Neben den gebräuchlichen elektroakustischen Ultraschallwandlern aus piezokeramischen Materialien können vorteilhaft bei der erfindungsgemäßen Vorrichtung — speziell für höhere Frequenzen — auch Ultraschallwandler aus piezoelektrischen Kunststoffen, wie z.B. Polyvinylidenfluorid (PVDF) Verwendung finden. Bei der Herstellung eines PVDF-Wandlers wird eine Metallplatte porenfrei mit PVDF beschichtet. Nachfolgend wird die PVDF-Schicht polarisiert und die freie Oberfläche metallisch — vorzugsweise mit Gold — beschichtet.

Die Erfindung wird nun unter Bezugnahme auf Beispiele, welche in der Zeichnung dargestellt sind, weiter erläutert. In der Zeichnung zeigt :

Fig. 1a eine Ausführungsform der erfindungsgemäßen Vorrichtung im horizontalen Schnitt nach der Linie Ia-Ia in Fig. 1b und Fig. 1b diese Ausführungsform im Schnitt nach der Linie Ib-Ib in Fig. 1a,

Fig. 2a eine weitere Ausführungsform der erfindungsgemäßen Vorrichtung im vertikalen Schnitt und Fig. 2b diese Ausführungsform im Schnitt nach der Linie IIb-IIb, bei welcher in einem Rohr ein koaxiales zylinderförmiges Wellenfeld erzeugt wird,

Fig. 3a eine weitere Ausführungsform der erfindungsgemäßen Vorrichtung im vertikalen Schnitt und Fig. 3b diese Ausführungsform im Schnitt nach der Linie IIIb-IIIb in Fig. 3a,

Fig. 4 eine Ausführungsform der erfindungsgemäßen Vorrichtung, bei welcher eine zweidimensionale Beschallung erfolgt, in einer Ansicht, und Fig. 5 eine Prinzipskizze einer mit einem Parallelplattenabscheider versehenen Ausführungsform der erfindungsgemäßen Vorrichtung.

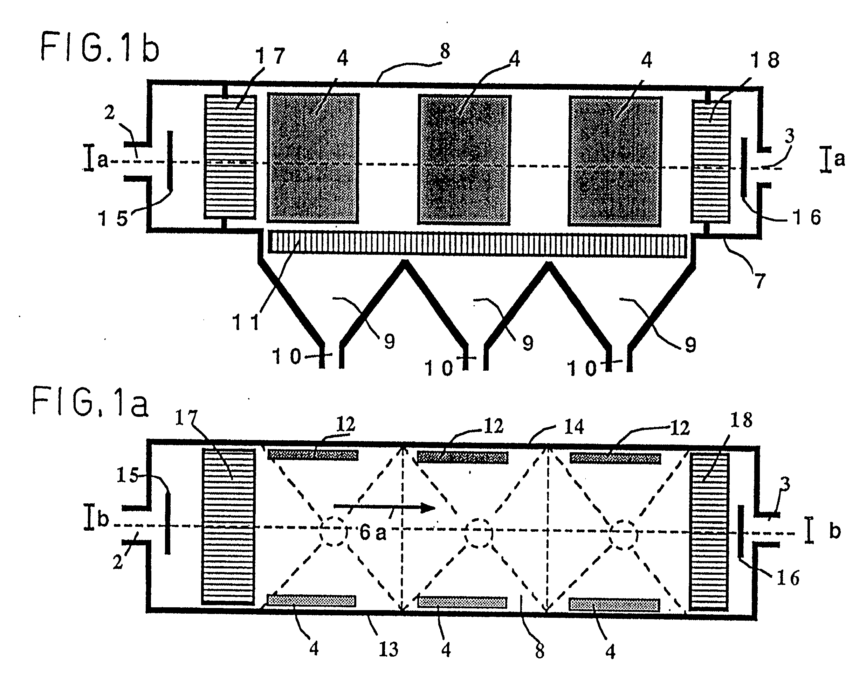

Bei der in Fig. 1a und Fig. 1b dargestellten Vorrichtung ist als Beschallungsraum ein Beschallungstank 8 vorgesehen, in dessen Boden 7 Absetztrichter 9 eingebaut sind, welche an ihren tiefsten Stellen verschließbare Ablaufstutzen 10 aufweisen. Die Absetztrichter 9 sind vom Beschallungstank durch eine gitterrostartige Strömungsblende 11 getrennt. An den beiden zur Durchflußrichtung 6a parallelen Seitenwänden 13 und 14 des Beschallungstanks 8 sind einander gegenüberliegend und parallel zueinander Ultraschallwandler 4 und Ultraschallreflektoren 12 angebracht. Nach dem Zuleitungsstutzen 2 und vor dem Ableitungsstutzen 3 sind Strömungsblenden 15 und 16 und Beruhigungsgitter 17 und 18 angeordnet. Die Durchflußrichtung 6a verläuft im rechten Winkel zur Schallausbreitungsrichtung.

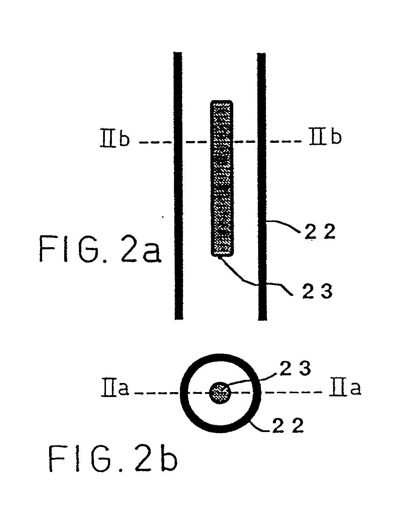

Bei der in Fig. 2a und 2b dargestellten Vorrichtung ist als Beschallungsraum ein Gefäß 22 in Form eines geraden, aus schallhartem Material bestehenden, zylindrischen Rohres vorgesehen, in welchem ein zylinderförmiger, radial schwingender Ultraschallwandler 23 koaxial eingebaut ist. Im Gefäß 22 wird ein dazu koaxiales zylindrisches Ultraschallfeld erzeugt.

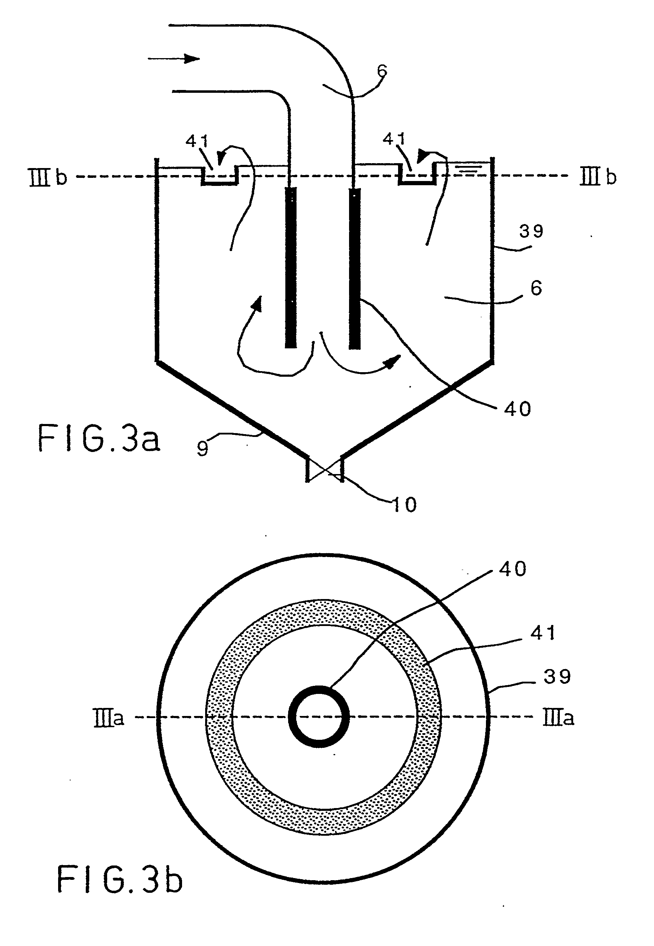

Die in Fig. 3a und 3b dargestellte Vorrichtung weist als Beschallungsraum einen lotrechten zylindrischen Beschallungstank 39 auf, welcher unten durch einen trichterförmigen Absetzraum 9 abgeschlossen ist, der einen verschließbaren Entnahmestutzen 10 besitzt. Im Beschallungstank 39 ist ein rohrförmiger Ultraschallwandler 40, durch welchen die Flüssigkeit in den Beschallungsraum geleitet wird, koaxial eingebaut. Am oberen Ende des Beschallungstanks 39 befindet sich eine horizontale, kreisringförmige Rinne 41 zur Ableitung der gereinigten Flüssigkeit. Die zu beschallende Flüssigkeit 6 durchströmt zuerst den Ultraschallwandler 40 und strömt dann an der Außenseite dieses Wandlers im Beschallungstank 39 nach oben, wonach sie über die Rinne 41 abgeleitet wird.

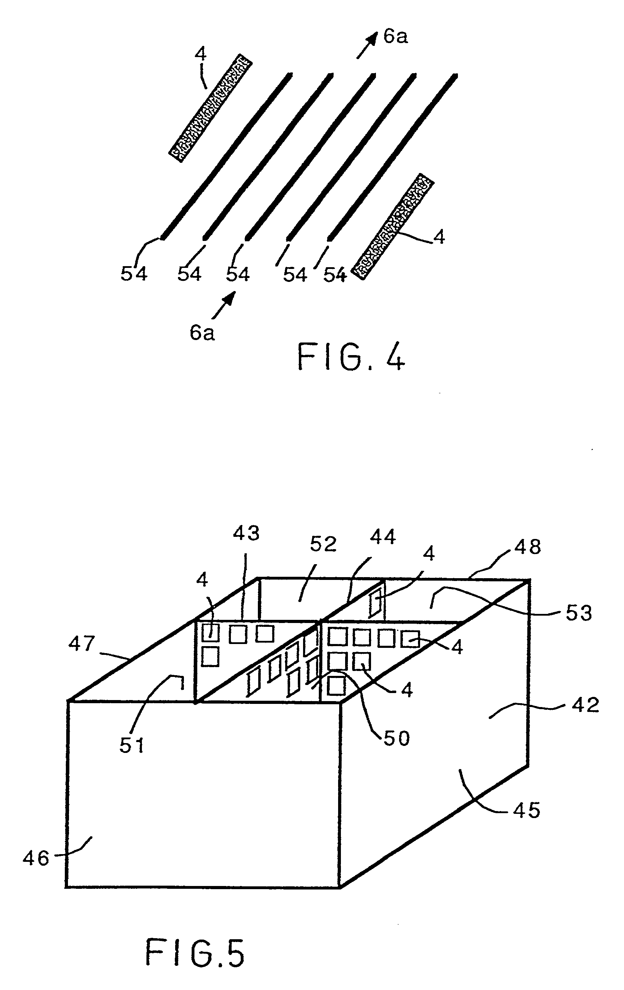

Die Fig. 4 zeigt eine Vorrichtung, die einen quaderförmigen Beschallungstank 42 aufweist, in welchen zwei Wände 43 und 44 eingebaut sind, welche Ultraschallwandler 4 tragen. Die Wände 43 und 44 verlaufen parallel zu den Seitenflächen 45, 46, 47, 48 des Beschallungstanks 42 und stehen im rechten Winkel zueinander und schneiden einander, so daß der Beschallungsraum in vier durchströmbare Teilräume 50, 51, 52, 53 geteilt wird. Die Ultraschallwandler bilden in den Teilräumen Ultraschallfelder, die einander im rechten Winkel schneiden.

Die in Fig. 5 dargestellte Vorrichtung weist einen Parallelplattenabscheider mit einer Gruppe geneigter und zueinander paralleler Abscheideplatten 54 und zwei zu den Abscheideplatten parallele Ultraschallwandler 4 auf.

## Patentansprüche

1. Verfahren zur Flockung, Fällung, Agglomeration oder Koagulation von in einer Flüssigkeit gelösten, kolloidal gelösten, suspendierten oder emulgierten Inhaltsstoffen oder Mikroorganismen und zur Abtrennung dieser Stoffe oder Mikroorganismen aus dieser Flüssigkeit, wobei die mit den abzutrennenden Inhaltsstoffen und/oder Mikroorganismen beladene Flüssigkeit im Durchfluß der Feldwirkung von Ultraschallwellen, die ein Feld stehender Wellen bilden, unterworfen wird, welche eine Ansammlung abzutrennender Teilchen in den Schwingungsknotenbereichen oder Schwingungsbauchbereichen des Ultraschallwellenfeldes bewirken, und die so angesammelten Teilchen von der Flüssigkeit durch Sedimentation abgetrennt werden, dadurch gekennzeichnet, daß die mit Inhaltsstoffen oder Mikroorganismen beladene Flüssigkeit in annähernd im rechten Winkel zur horizontalen Schallausbreitungsrichtung des Ultraschalles verlaufendem Durchfluß durch ein oder mehrere Felder stehender Ultraschallwellen hindurchgeleitet wird, wobei die Ultraschallfrequenz f größer ist als ein Siebentel der Grenzfrequenz fo, wobei der Bereich oberhalb der halben Grenzfrequenz fo bevorzugt ist und für fo gilt: fo (Hz) = 0,4775 n/R$^2$ ; hiebei ist n die kinematische Viskosität der Flüssigkeit in m$^2$/s und R der wirksame Partikelradius in m ; der wirksame Partikelradius R ist bei kugelförmigen Partikeln gleich deren Radien ; für Partikel anderer Gestalt ist R der Radius jener Kugel aus gleichem Stoff, welche der oszillierenden Flüssigkeit den gleichen Strömungswiderstand entgegensetzt.

2. Verfahren nach Anspruch 1, dadurch gekennzeichnet, daß die Flüssigkeit in laminarer Strömung durch das Ultraschallfeld beziehungsweise die Ultraschallfelder geleitet wird.

3. Verfahren nach Anspruch 1 oder 2, dadurch gekennzeichnet, daß die Flüssigkeit in einem stehenden Ultraschallwellenfeld, das zwischen zwei parallelen und einander gegenüberliegend angeordneten Ultraschallwandlern gebildet wird, im horizontalen Durchfluß beschallt wird.

4. Verfahren nach Ansprüche 1 oder 2, dadurch gekennzeichnet, daß die Flüssigkeit zwei Ultraschallfeldern ausgesetzt wird, welche einander räumlich innerhalb des Beschallungsraumes überschneiden und gleichzeitig oder alternierend auf die Flüssigkeit einwirken, wobei vorzugsweise zwei ebene Ultraschallfelder, die einander im rechten Winkel schneiden, angewendet werden, wobei die Schnittlinien der Schwingungsknotenebenen parallel zur Durchflußrichtung der Flüssigkeit verlaufen.

5. Verfahren nach Anspruch 1 oder 2, dadurch gekennzeichnet, daß die Flüssigkeit in einem zylindrischen Ultraschallfeld, dessen Schwingungsknoten in annähernd zylindrischen und zueinander koaxialen Flächen liegen, und durch das die Flüssigkeit annähernd parallel zur geometrischen Achse des Feldes hindurchgeleitet wird, oder aufeinanderfolgend im mehreren solchen Feldern, beschallt wird.

6. Verfahren nach einem der Ansprüche 1 bis 5, dadurch gekennzeichnet, daß den für die Beschallung verwendeten Ultraschallwandlern eine elektrische Schwingung mit einer Leistung von weniger als 3 Watt/cm$^2$ der Wandleroberfläche zugeführt wird, wobei der Bereich zwischen 0,5 und 2 Watt/cm$^2$ bevorzugt ist.

7. Verfahren nach einem der Ansprüche 1 bis 6, dadurch gekennzeichnet, daß der zu behandelnden Flüssigkeit eine Ultraschallenergie zwischen 0,05 und 10 kWh pro m$^3$ zugeführt wird, wobei der Bereich zwischen 0,1 und 4 kWh bevorzugt ist.

8 Verfahren nach einem der Ansprüche 1 bis 7, dadurch gekennzeichnet, daß zur Behandlung von Mineralstoffsuspensionen Ultraschallfrequenzen zwischen fo/3 und 10 fo mit Bevorzugung des Bereiches zwischen fo und 4 fo verwendet werden.

9. Verfahren nach einem der Ansprüche 1 bis 7, dadurch gekennzeichnet, daß zur Behandlung von Flüssigkeiten mit Inhaltsstoffen, deren Dichte annähernd der Dichte der Flüssigkeit entspricht, Ultraschallfrequenzen zwischen 2 fo und 15 fo verwendet werden, wobei der Bereich zwischen 3 fo und 5 fo bevorzugt ist.

10 Verfahren nach einem der Ansprüche 1 bis 7, dadurch gekennzeichnet, daß zur Koagulation von Kohlepartikeln, die sich in Wasser befinden, Ultraschallfrequenzen zwischen fo/2 und 10 fo verwendet werden, wobei der Bereich zwischen fo und 4 fo bevorzugt ist.

11. Verfahren nach einem der Ansprüche 1 bis 7, dadurch gekennzeichnet, daß zur Koagulation von Inhaltsstoffen, deren Dichte sich wesentlich von der Dichte der Flüssigkeit unterscheidet, insbesondere zur Koagulation suspendierter Metallstäube, Ultraschallfrequenzen zwischen fo/7 und 10 fo mit Bevorzugung des Bereiches zwischen fo/6 und fo/2 verwendet werden.

12. Verfahren nach einem der Ansprüche 1 bis 11, dadurch gekennzeichnet, daß die Ultraschallfrequenz im Zuge der Beschallung der Flüssigkeit — insbesondere stufenweise — ververändert, vorzugsweise herabgesetzt wird.

13. Verfahren nach einem der Ansprüche 1 bis 12, dadurch gekennzeichnet, daß die Beschallung der Flüssigkeit intermittierend vorgenommen wird.

14. Verfahren nach einem der Ansprüche 1 bis 13, dadurch gekennzeichnet, daß die Beschallung der Flüssigkeit mit amplitudenmoduliertem Ultraschall vorgenommen wird, wobei der Modulationsgrad vorzugsweise größer als 70% gewählt wird.

15. Verfahren nach Anspruch 14, dadurch gekennzeichnet, daß Ultraschall, der mit einer unter 20 kHz liegenden Frequenz amplitudenmoduliert ist, verwendet wird.

16. Verfahren nach einem der Ansprüche 1 bis 15, dadurch gekennzeichnet, daß der Flüssigkeit vor der Beschallung ein pulverförmiges Adsorptionsmittel, vorzugsweise Aktivkohle, beigemengt wird.

17. Verfahren nach einem der Ansprüche 1 bis 16, dadurch gekennzeichnet, daß der Flüssigkeit vor der Beschallung zur Ermöglichung oder Verbesserung der Koagulation ihrer Inhaltsstoffe Flockungsmittel und/oder Flockungshilfsmittel zudosiert werden.

18. Vorrichtung zur Durchführung des Verfahrens nach Anspruch 1 mit einem Beschallungsraum, durch den die zu behandelnde Flüssigkeit hindurchgeleitet wird und der an einer Wand angeordnete Ultraschallwandler aufweist, die im Beschallungsraum ein Ultraschallfeld bilden, und der weiter mit einem oder mehreren Absetzräumen versehen ist, an deren tiefsten Stellen Entnahmevorrichtungen für die abgesetzten Teilchen vorgesehen sind, dadurch gekennzeichnet, daß der Beschallungsraum der Vorrichtung durch einen Beschallungstank (8) gebildet ist, der an oder in einer zur horizontalen Durchflußrichtung der Flüssigkeit (6) parallelen Seitenwand (13) einen oder mehrere Ultraschallwandler (4) und an der gegenüberliegenden zur Durchflußrichtung parallelen Seitenwand (14) Schallreflektoren (12) aufweist und in dessen Tankboden (7) der oder die vorzugsweise trichterförmige (n) Absetzräume (9) vorgesehen sind, welche vorzugsweise oben durch Strömungsblenden (11) begrenzt sind. (Fig. 1a, 1b).

19. Vorrichtung zur Durchführung des Verfahrens nach Anspruch 4, mit einem Beschallungsraum, durch den die zu behandelnde Flüssigkeit hindurchgeleitet wird und der an einer Wand angeordnete Ultraschallwandler aufweist, die im Beschallungsraum ein Ultraschallfeld bilden, und der weiter mit einem oder mehreren Absetzräumen versehen ist, an deren tiefsten Stellen Entnahmevorrichtungen für die abgesetzten Teilchen vorgesehen sind, dadurch gekennzeichnet, daß der Beschallungsraum der Vorrichtung durch einen durchströmbaren quaderförmigen Beschallungstank (42) gebildet ist, in den zwei zueinander im rechten Winkel stehende und ebene Wände (43, 44) eingebaut sind, welche Gruppen von Ultraschallwandlern (4) tragen, wobei diese Wände (43, 44) zu den Seitenflächen (45, 46, 47, 48) des Beschallungstankes (42) parallel verlaufen und einander innerhalb des Beschallungsraumes vorzugsweise so schneiden, daß der Beschallungsraum in zwei oder mehrere durchströmbare Teilräume (50, 51, 52, 53) geteilt wird (Fig. 4).

20. Vorrichtung zur Durchführung des Verfahrens nach Anspruch 5, mit einem Beschallungsraum, durch den die zu behandelnde Flüssigkeit hindurchgeleitet wird und der einen Ultraschallwandler aufweist, der im Behandlungsraum ein Ultraschallfeld bildet, dadurch gekennzeichnet, daß der Beschallungsraum der Vorrichtung durch ein Gefäß (22) in Form eines geraden Zylinders aus vorzugsweise schallhartem Material gebildet ist, in welchen ein zylindrischer, radial schwingender Ultraschallwandler (23) koaxial eingebaut ist (Fig. 2a, 2b).

21. Vorrichtung nach Anspruch 20, dadurch gekennzeichnet, daß der zylindrische Ultraschallwandler (23) rohrförmige Gestalt hat und sowohl in seinem Inneren von der Flüssigkeit (6) durchströmt als auch außen von der Flüssigkeit umströmt wird (Fig. 3a, 3b).

22. Vorrichtung zur Durchführung des Verfahrens nach Anspruch 1, mit einem Beschallungsraum, durch den die zu behandelnde Flüssigkeit hindurchgeleitet wird und der einen Ultraschallwandler aufweist, der im Behandlungsraum ein Ultraschallfeld bildet, dadurch gekennzeichnet, daß im Beschallungsraum der Vorrichtung ein Parallelplattenabscheider (55) angeordnet ist, durch dessen zwischen den Abscheideplatten (56) liegenden Zwischenräumen (57) die Flüssigkeit (6) hindurchgeleitet wird, und daß zwei ebene Gruppen von Ultraschallwandlern (4) parallel zum Abscheideplattenpaket angeordnet sind, wobei das gesamte Abscheideplattenpaket zwischen den Ultraschallwandlern liegt, und die Dicke der Abscheideplatten (56) vorzugsweise einem ungeradzahligen Vielfachen eines Viertels der Wellenlänge des Ultraschalles in diesen Abscheideplatten entspricht und die Oberflächenrauhigkeit der Abscheideplatten ein Zehntel der Ultraschallwellenlänge nicht übersteigt (Fig. 5).

23. Vorrichtung nach einem der Ansprüche 17 bis 22, dadurch gekennzeichnet, daß Ultraschallwandler aus piezoelektrischen Kunststoffen, vorzugsweise aus Polyvinylidenfluorid, vorgesehen sind.

24. Vorrichtung nach Anspruch 23, dadurch gekennzeichnet, daß die Ultraschallwandler aus Schichten eines polarisierbaren Stoffes aufgebaut sind, die als Pulverbeschichtung auf Tragplatten aufgebracht sind.

## Claims

1. A process for the flocculation, precipitation, agglomeration or coagulation of constituents or microorganisms emulsified, suspended, colloidally dissolved or dissolved in a liquid, and for separating said substances or microorganisms from said liquid, the liquid charged with the constituents and/or microorganisms for separation being subjected, in a continuous flow, to the field action of ultrasound waves which form a standing wave field, such waves causing the particles for separation to accumulate in the oscillation node zones or oscillation antinode zones of the ultrasound field, and the particles thus accumulated are separated from the liquid by sedimentation, characterised in that the liquid charged with constituents or micro-organisms is passed through one or more standing ultrasound wave fields in a continuous flow extending approximately at a right angle to the horizontal direction of propagation of the ultrasound, the ultrasound frequency f being greater than one-seventh of the critical frequency fo, the range above half the critical frequency fo being preferred and where : fo (HZ) = 0.4775 n/R², where n is the kinematic viscosity of the liquid in m²/s and R is the effective particle radius in m ; in the case of spherical particles the effective particle radius R is equal to the radii of said particles ; for particles of a different shape R is the radius of that sphere of the same material which offers the same resistance to the flow of the oscillating liquid.

2. A process according to claim 1, characterised in that the liquid is passed through the ultrasound field or fields in a laminar flow.

3. A process according to claim 1 or 2, characterised in that the liquid is subjected to the ultrasound treatment in a horizontal continuous flow in a standing ultrasound wave field formed between two parallel and opposite ultrasound transducers.

4. A process according to claim 1 or 2, characterised in that the liquid is subjected to two ultrasound fields which overlap one another spatially within the ultrasound treatment chamber and which act on the liquid simultaneously or alternately, use preferably being made of two flat ultrasound fields which intersect at a right angle, the lines of intersection of the oscillation node planes extending parallel to the direction of flow of the liquid.

5. A process according to claim 1 or 2, characterised in that the liquid is subjected to ultrasound treatment in a cylindrical ultrasound field whose oscillation nodes are situated in approximately cylindrical and coaxial surfaces, the liquid being passed through said cylindrical ultrasound field substantially parallel to the geometric axis of the field, or is passed consecutively therethrough in a plurality of such fields.

6. A process according to any one of claims 1 to 5, characterised in that the ultrasound transducers used for the ultrasound treatment are fed with an electrical oscillation having a power of less than 3 Watts/cm² of transducer surface, the range between 0.5 and 2 Watts/cm² being preferred.

7. A process according to any one of claims 1 to 6, characterised in that the liquid for treatment is fed with an ultrasound energy of between 0.05 and 10 kWh per m³, the range between 0.1 and 4 kWh being preferred.

8. A process according to any one of claims 1 to 7, characterised in that ultrasound frequencies between fo/3 and 10 fo, with preference being given to the range between fo and 4 fo, are used to treat mineral substance suspensions.

9. A process according to any one of claims 1 to 7, characterised in that ultrasound frequencies between 2 fo and 15 fo, with preference being given to the range between 3 fo and 5 fo, are used to treat liquids having constituents whose density corresponds approximately to the density of the liquid.

10. A process according to any one of claims 1 to 7, characterised in that ultrasound frequencies between fo/2 and 10 fo, with preference being given to the range between fo and 4 fo, are used for the coagulation of carbon particles present in water.

11. A process according to any one of claims 1 to 7, characterised in that ultrasound frequencies between fo/7 and 10 fo, with preference being given to the range between fo/6 and fo/2, are used for the coagulation of constituents whose density differs substantially from the density of the liquid, more particularly for the coagulation of suspended metal dusts.

12. A process according to any one of claims 1 to 11, characterised in that the ultrasound frequency is changed, preferably reduced, more particularly stepwise, during the ultrasound treatment of the liquid.

13. A process according to any one of claims 1 to 12, characterised in that the ultrasound treatment of the liquid is effected intermittently.

14. A process according to any one of claims 1 to 13, characterised in that the ultrasound treatment of the liquid is effected with amplitude-modulated ultrasound, the degree of modulation preferably being greater than 70%.

15. A process according to claim 14, characterised in that the ultrasound used is amplitude-modulated with a frequency below 20 kHz.

16. A process according to any one of claims 1 to 15, characterised in that a pulverulent adsorption agent, preferably active carbon, is added to the liquid before the ultrasound treatment.

17. A process according to any one of claims 1 to 16, characterised in that flocculants and/or flocculation aids are added to the liquid before the ultrasound treatment in order to allow or improve coagulation of its constituents.

18. Apparatus for performing the process according to claim 1, comprising an ultrasound treatment chamber through which the liquid for treatment is passed and which comprises ultrasound transducers disposed on a wall and forming an ultrasound field in the ultrasound treatment chamber, and which is also provided with one or more sedimentation chambers, at the lowest point of which withdrawal means are provided for the deposited particles, characterised in that the ultrasound treatment chamber of the apparatus is formed by an ultrasound treatment tank (8) having one or more ultrasound transducers (4) on or in a side wall (13) parallel to the horizontal direction of flow of the liquid (6) and sonic reflectors (12) on the opposite side wall (14) parallel to the direction of flow, the bottom (7) of the tank containing the preferably funnel-shaped sedimentation chamber or chambers (9) which are preferably bounded at the top by flow restrictors (11) (Figs. 1a, 1b).

19. Apparatus for performing the process according to claim 4, comprising an ultrasound treatment chamber through which the liquid for treatment is passed and which comprises ultrasound transducers disposed on a wall and forming an ultrasound field in the ultrasound treatment chamber, and which is also provided with one or more sedimentation chambers, at the lowest point of which withdrawal means are provided for the deposited particles, characterised in that the ultrasound treatment chamber of the apparatus is formed by a parallelepipedal ultrasound treatment tank (42) through which a liquid can flow and which contains two flat walls (43, 44) at a right angle to one another, said walls carrying groups of ultrasound transducers (4), said walls (43, 44) extending parallel to the side surfaces (45, 46, 47, 48) of the ultrasound treatment tank (42) and preferably intersecting one another inside the ultrasound treatment chamber in such manner that the said chamber is divided into two or more sub-chambers (50, 51, 52, 53) through which the liquid can flow (Fig. 4).

20. Apparatus for performing the process according to claim 5, with an ultrasound treatment chamber through which the liquid for treatment is passed and which comprises an ultrasound transducer forming an ultrasound field in the treatment chamber, characterised in that the ultrasound treatment chamber of the apparatus is formed by a vessel (22) in the form of a straight cylinder of a material which is preferably live and which contains coaxially therein a cylindrical radially oscillating ultrasound transducer (23) (Figs. 2a, 2b).

21. Apparatus according to claim 20, characterised in that the cylindrical ultrasound transducer (23) is of tubular shape and the liquid (6) flows both through its interior and around the outside (Figs. 3a, 3b).

22. Apparatus for performing the process according to claim 1, with an ultrasound treatment chamber through which the liquid for treatment is passed and which comprises an ultrasound transducer forming an ultrasound field in the treatment chamber, characterised in that the apparatus ultrasound treatment chamber contains a parallel plate separator (55), through the interstices (57) of which, situated between the separating plates (56), the liquid (6) is passed, and in that two flat groups of ultrasound transducers (4) are disposed parallel to the separating plate assembly, the entire separating plate assembly being situated between the ultrasound transducers, and the thickness of the separating plates (56) is preferably equal to an odd-numbered multiple of one-quarter of the wavelength of the ultrasound in said separating plates and the surface roughness of the separating plates does not exceed one-tenth of the ultrasound wavelength (Fig. 5).

23. Apparatus according to any one of claims 17 to 22, characterised in that ultrasound transducers are provided which consist of piezo-electric plastics, preferably polyvinylidene fluoride.

24. Apparatus according to claim 23, characterised in that the ultrasound transducers are constructed from layers of a polarisable material applied as a powder coating to support plates.

## Revendications

1. Procédé de floculation, de précipitation, d'agglomération ou de coagulation de substances incluses ou de micro-organismes en solution, en solution colloïdale, en suspension ou en émulsion dans un liquide et de séparation de ces substances ou micro-organismes de ce liquide, le liquide chargé des substances incluses et/ou des micro-organismes devant être séparés étant mis en circulation et exposé à l'action d'un champ d'ondes ultra-sonores qui forment un champ d'ondes stationnaires qui provoquent une accumulation des particules devant être séparées dans les zones des noeuds des oscillations ou dans les zone des ventres des oscillations du champ d'ondes ultra-sonores et les particules ainsi accumulées sont séparées du liquide par sédimentation, caractérisé en ce que le liquide chargé de substances incluses ou de micro-organismes est dirigé en une circulation, qui est approximativement à angle droit par rapport à la direction horizontale de propagation de l'ultra-son, à travers un ou plusieurs champs d'ondes ultra-sonores stationnaires, la fréquence f de l'ultra-son étant supérieure à un septième de la fréquence limite fo, la plage supérieure à la moitié de la fréquence limite fo étant préférée et fo obéissant à la relation

fo (Hz) = 0,4775 n/R² ; relation dans laquelle n est la viscosité cinématique du liquide en m²/s et R, le rayon efficace des particules en m ; le rayon efficace R de particule sphériques est égal à leur rayon ; pour des particules ayant une autre configuration, R est le rayon de la sphère de la même matière qui oppose la même résistance hydraulique au liquide oscillant.

2. Procédé selon la revendication 1, caractérisé en ce que le liquide est dirigé en écoulement laminaire à travers le champ ou les champs d'ultra-sons.

3. Procédé selon la revendication 1 ou 2, caractérisé en ce que le liquide circulant horizontalement est exposé à un champ d'ondes ultra-sonores stationnaire qui est formé entre deux transducteurs d'ultrasons qui sont parallèles et face à face.

4. Procédé selon la revendication 1 ou 2, caractérisé en ce que le liquide est exposé à deux champs qui se chevauchent dans l'espace à l'intérieur de la chambre d'exposition aux ultras-sons et qui agissent simultanément ou en alternance sur le liquide, deux champs plans d'ultra-sons qui se coupent à angle droit étant de préférence utilisés et les lignes de coupe des plans des noeuds des oscillations étant parallèles à la direction de la circulation du liquide.

5. Procédé selon la revendication 1 ou 2, caractérisé en ce que le liquide est exposé aux ultra-sons dans un champ cylindrique dont les noeuds des oscillations sont situés dans des surfaces approximativement cylindriques et coaxiales et par lequel le liquide est dirigé approximativement parallèlement à l'axe géométrique du champ, ou successivement dans plusieurs de tels champs.

6. Procédé selon l'une des revendications 1 à 5, caractérisé en ce qu'une oscillation électrique d'une puissance inférieure à 3 Watt/cm² de la surface des transducteurs est dirigée sur les transducteurs utilisés pour l'exposition aux ultra-sons, la plage comprise entre 0,5 et 2 Watt/cm² étant préférée.

7. Procédé selon l'une des revendications 1 à 6, caractérisé en ce qu'une énergie d'ultra-sons comprise entre 0,05 et 10 kWh par m³ est envoyée dans le liquide à traiter, la plage comprise entre 0,1 et 4 kWh étant préférée.

8. Procédé selon l'une des revendications 1 à 7, caractérisé en ce que des fréquences d'ultra-sons comprises entre fo/3 et 10 fo, avec une préférence pour la plage comprise entre fo et 4 fo, sont utilisées pour le traitement de suspensions de substances minérales.

9. Procédé selon l'une des revendications 1 à 7, caractérisé en ce que des fréquences d'ultra-sons comprises entre 2 fo et 15 fo sont utilisées pour le traitement de liquides contenant des substances incluses dont la densité correspond approximativement à la densité du liquide, la plage comprise entre 3 fo et 5 fo étant préférée.

10. Procédé selon l'une des revendications 1 à 7, caractérisé en ce que des fréquences d'ultra-sons comprises entre fo/2 et 10 fo sont utilisées pour la coagulation de particules de charbon qui se trouvent dans de l'eau, la plage comprise entre fo et 4 fo étant préférée.

11. Procédé selon l'une des revendications 1 à 7, caractérisé en ce que des fréquences d'ultra-sons comprises entre fo/7 et 10 fo, avec une préférence pour la plage comprise fo/6 et fo/2, sont utilisées pour la coagulation de substances incluses dont la densité diffère sensiblement de la densité du liquide, en particulier pour la coagulation de poudres métalliques en suspension.

12. Procédé selon l'une des revendications 1 à 11, caractérisé en ce que la fréquence des ultra-sons est modifiée au cours de l'exposition du liquide aux ultra-sons — en particulier par paliers — et de préférence subit un abaissement.

13. Procédé selon l'une des revendications 1 à 12, caractérisé en ce que l'exposition aux ultra-sons du liquide est effectuée de manière intermittente.

14. Procédé selon l'une des revendications 1 à 13, caractérisé en ce que l'exposition du liquide est effectuée par ultra-son modulé en amplitude, le taux de modulation adopté étant de préférence supérieur à 70%.

15. Procédé selon la revendication 14, caractérisé en ce que l'ultra-son utilisé est modulé en amplitude à une fréquence inférieure à 20 kHz.

16. Procédé selon l'une des revendications 1 à 15, caractérisé en ce qu'un agent d'adsorption pulvérulent, de préférence du charbon actif, est mélangé au liquide avant l'exposition aux ultra-sons.

17. Procédé selon l'une des revendications 1 à 16, caractérisé en ce que des agents de floculation et/des adjuvants de floculation sont ajoutés en quantité dosée au liquide avant l'exposition aux ultra-sons afin de permettre ou d'améliorer la coagulation de ses substances incluses.

18. Dispositif pour la mise en oeuvre du procédé de la revendication 1, comprenant une chambre d'exposition aux ultra-sons par laquelle le liquide devant être traité est dirigé et qui comprend des transducteurs d'ultra-sons disposés sur une paroi et formant dans la chambre un champ d'ultra-sons, ledit dispositif comportant par ailleurs une ou plusieurs chambres de décantation aux emplacements les plus profonds desquelles sont prévus des dispositifs de prélèvement des particules déposées, caractérisé en ce que la chambre d'exposition aux ultra-sons du dispositif est formée d'une cuve (8) qui comporte, sur ou dans une paroi latérale (13) parallèle à la direction horizontale de circulation du liquide (6), un ou plusieurs transducteurs (4) d'ultra-sons et sur la paroi latérale opposée (14), parallèle à la direction de la circulation, des réflecteurs d'ultra-sons (12), la ou les chambre(s) de décantation (9), de préférence en forme de trémie(s), prévue(s) dans le fond (7) de la cuve étant de préférence délimitée(s) à la partie supérieure par des diaphragmes d'écoulement (11) (figures 1a, 1b).

19. Dispositif pour la mise en oeuvre du procédé selon la revendication 4, comprenant une chambre d'exposition aux ultra-sons par laquelle le liquide devant être traité est dirigé et qui comporte sur une paroi des transducteurs d'ultra-sons qui forment dans la chambre d'exposition un champ d'ultra-sons, ladite chambre comprenant par ailleurs une ou plusieurs chambres de décantation aux emplacements les plus profonds desquelles sont prévus des dispositifs de prélèvement des particules déposées, caractérisé en ce que la chambre d'exposition aux ultra-sons du dispositif est formée d'une curve parallélépipédique (42) dans laquelle peut avoir lieu une circulation et dans laquelle deux parois planes (43, 44) sont disposées à angle droit l'une par rapport à l'autre et supportent des groupes de transducteurs (4) d'ultra-sons, ces parois (43, 44) étant parallèles aux surfaces latérales (45, 46, 47, 48) de la cuve d'exposition aux ultra-sons et se coupant à l'intérieur de la chambre d'exposition aux ultra-sons de préférence de manière que cette chambre soit divisée en deux compartiments ou davantage (50, 51, 52, 53) par lesquels peut passer une circulation (figure 4).

20. Dispositif pour la mise en oeuvre du procédé selon la revendication 5, comprenant une chambre d'exposition aux ultra-sons par laquelle le liquide devant être traité est dirigé et qui comprend un transducteur d'ultra-sons qui crée dans la chambre d'exposition un champ d'ultra-sons, caractérisé en ce que la chambre d'exposition aux ultra-sons du dispositif est formée d'un récipient (22) en forme de cylindre droit, de préférence en matériau réverbérant, dans lequel est monté coaxialement un transducteur cylindrique d'ultra-sons (23) vibrant radialement (figures 2a, 2b).

21. Dispositif selon la revendication 20, caractérisé en ce que le transducteur cylindrique d'ultra-sons (23) a une forme tubulaire et il est balayé aussi bien intérieurement qu'extérieurement par le liquide (6) (figures 3a, 3b).

22. Dispositif pour la mise en oeuvre du procédé selon la revendication 1, comprenant une chambre d'exposition aux ultra-sons par laquelle le liquide devant être traité est dirigé et qui comporte un transducteur d'ultra-sons qui forme dans la chambre d'exposition un champ d'ultra-sons, caractérisé en ce qu'un séparateur à plateaux parallèles (55), par lequel le liquide (6) est dirigé dans les intervalles (57) situés entre les plateaux séparateurs (56), est disposé dans la chambre d'exposition aux ultra-sons du dispositif et deux groupes plans de transducteurs d'ultra-sons (4) sont disposés parallèlement au groupe de plateaux séparateurs, l'ensemble de ce groupe de plateaux étant disposé entre les transducteurs d'ultrasons et l'épaisseur des plateaux séparateurs (56) correspondant de préférence à un multiple impair d'un quart de la longueur d'onde de l'ultra-son dans ces plateaux séparateurs et la rugosité de la surface des plateaux séparateurs ne dépassant pas un dixième de la longueur d'onde de l'ultra-son (figure 5).

23. Dispositif selon l'une des revendications 17 à 22, caractérisé en ce que des transducteurs d'ultra-sons en matière synthétique piézo-électrique, de préférence en fluorure de polyvinylidène, sont prévus.

24. Dispositif selon la revendication 23, caractérisé en ce que les transducteurs d'ultra-sons se composent de couches d'une substance polarisable qui est déposée sous forme d'un revêtement pulvérulent sur des plateaux formant des substrats.

FIG.1b

FIG.1a

FIG. 2a

FIG. 2b

FIG.3a

FIG.3b

FIG. 4

FIG.5